# EUROPEAN PATENT SPECIFICATION

(11) **EP 1 118 533 B1**
(45) Date of publication and mention of the grant of the patent: **10.12.2003**
(21) Application number: 01101371.1
(22) Date of filing: 22.01.2001
(51) Int. Cl.: B62L 3/00, B60T 17/04, B60T 11/04

(54) **Cable harness assembly for bicycle**
Kabelkonfektioniereinheit für Fahrrad
Unité de confection de cables pour bicyclette

(30) Priority: 21.01.2000 US 488711
(43) Date of publication of application: 25.07.2001
(73) Proprietor: SHIMANO INC., Osaka (JP)
(72) Inventor: Uchiyama, Yuzuru, Sakai-shi, Osaka (JP)
(74) Representative: Herrmann-Trentepohl, Werner, Dipl.-Ing.

(56) References cited:
- EP-A- 0 314 357
- EP-A- 0 695 682
- DE-U- 9 200 121
- DE-U- 9 210 298

## Description

### BACKGROUND OF THE INVENTION

### 1. Field of the Invention

This invention generally relates to a cable harness assembly for a bicycle. More specifically, the present invention relates to a cable harness assembly for guiding a disk brake control hose, a control cable or the like in accompaniment with a conventional cable stopper brazed on a bicycle frame.

### 2. Background Information

An arrangement of a generic cable harness is described in the ROC (Taiwan) Patent Publication No. 361417, such as that in Figure 10. This type of cable harness A includes a cable gripper 33, a connector 30 and a connecting screw 31. The cable harness A is mounted to a bicycle by being mounted to a conventional cable stopper 11 brazed on the bicycle frame.

However, in such a type of cable harness A, the connector screw 31 must be detached from the connector 30 and then removed from the cable gripper 33 prior to being mounted to a cable stopper 11 of the bicycle frame. This arrangement is thus tedious to use and may easily result in losing small parts after dismantling.

The necessity arises of mounting a cable harness to the cable stopper without having to dismantle the cable harness in order to carry out mounting operations.

In view of the above, there exists a need for a cable harness assembly which overcomes the above mentioned problems in the prior art. This invention addresses this need in the prior art as well as other needs, which will become apparent to those skilled in the art from this disclosure.

### SUMMARY OF THE INVENTION

One object of the present invention is to provide a cable harness assembly that is easy to install.

More specifically, an object of the invention to design an arrangement for holding hoses, cables, or hydraulic lines in such a way that easy mounting is possible without the necessity to dismantle the cable harness assembly. As a result, losing of small parts can also be prevented and mounting can be easily accomplished without involving extraneous work.

To achieve the intended object, this invention discloses a cable harness assembly according to claim 1 or 19. The cable harness substantially comprises a hose hanger, a hanger stopper, a stopper bushing and a hanger fixing bolt, wherein the stopper bushing expands when the fixing bolt is fastened to the hanger stopper forcing the hose hanger and the hanger stopper to press against the stopper bushing.

A further embodiment including a hose hanger and a stopper bushing is disclosed where the stopper bushing will rotate and skew with respect to the hose hanger while performing the fastening operation.

These and other objects, features, aspects and advantages of the present invention will become apparent to those skilled in the art from the following detailed description, which, taken in conjunction with the annexed drawings, discloses a. preferred embodiment of the present invention.

### BRIEF DESCRIPTION OF THE DRAWINGS

Referring now to the attached drawings which form a part of this original disclosure:
Figure 1 is an exploded view illustrating the cable harness assembly in accordance with one embodiment of this invention;
Figure 2 is a cross-sectional view illustrating the cable harness assembly of Figure 1 before being mounted to a cable stopper brazed on a bicycle frame;
Figure 3 is a cross-sectional view illustrating the cable harness assembly of Figure 1 after being mounted to a cable stopper brazed on a bicycle frame;
Figure 4 is an exploded view illustrating a second embodiment of a cable harness assembly of this invention;
Figure 5 is a cross-sectional view illustrating the cable harness assembly of Figure 4 before being mounted to a cable stopper brazed on a bicycle frame;
Figure 6 is an exploded view illustrating a third embodiment of a cable harness assembly of this invention;
Figure 7 is a cross-sectional view illustrating the cable harness assembly of Figure 6 before being mounted to a cable stopper brazed on a bicycle frame;
Figure 8 is a cross-sectional view illustrating a fourth embodiment of a cable harness assembly of this invention;
Figure 9 illustrates a hose or a hydraulic line being guided through a cable harness assembly of this invention; and
Figure 10 illustrates a conventional prior art cable harness that is attached to a cable stopper brazed on a bicycle frame.

### DETAILED DESCRIPTION OF THE PREFERRED EMBODIMENTS

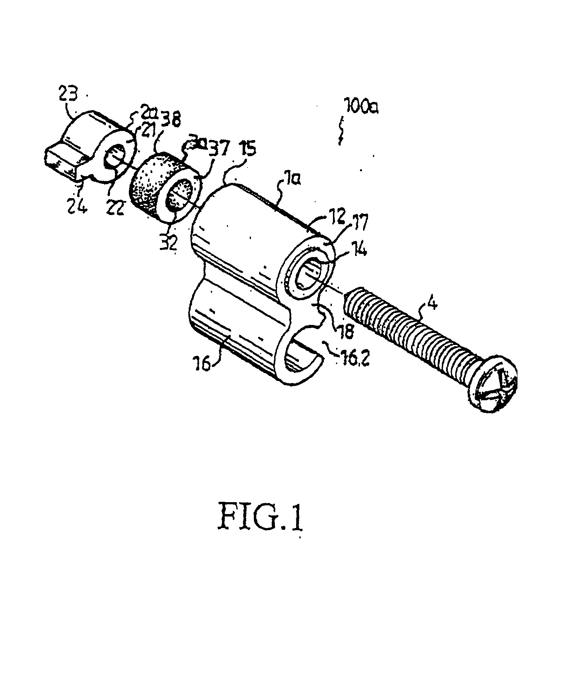

As shown in Figure 1, a cable harness assembly 100a is illustrated in accordance with one embodiment of the present invention. The cable harness assembly 100a basically comprises a hose hanger 1a, a hanger stopper 2a, a stopper bushing 3a and a hanger fixing bolt 4. The hose hanger 1a includes a body portion 12, a cable portion 16, and opposite ends 15 and 17. The body portion 12 has a first outer diameter or width that has a first axial bore 14 extending between opposite ends 15 and 17. The cable portion 16 extends outwardly from the body portion 12 for receiving a control cable or hose.

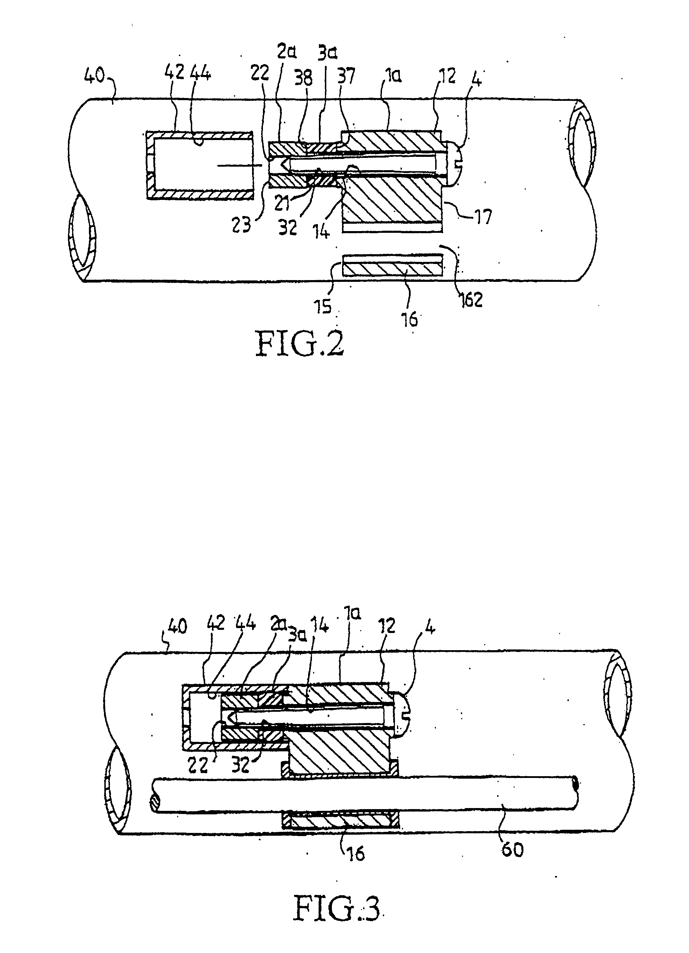

To enhance the flexibility of the hose hanger 1a, the body portion 12 and the cable portion 16 of the hose hanger 1a can be joined by a neck portion 18. The hose hanger 1a is preferably integrally formed as a one-piece, unitary member by injection molding. The cable portion 16 of the hose hanger 1a is formed with a longitudinal opening or slot 162, preferably be configured to have a C-shaped cross-section. The C-shaped configuration of slot 162 has an inner diameter or width that is proximate to the outer diameter or width of a hose or hydraulic line 60, to be held in the cable portion 16 as seen in Figure 3.

The hanger stopper 2a has opposite ends 21 and 23 and a second outer diameter or width, that is preferably slightly smaller than the first outer diameter or width of the body portion 12. The hanger stopper 2a is formed with a second axial bore 22 extending between opposite ends 21 and 23. A halting piece 24 further extends from the hanger stopper 2a, preferably in an outwardly radial direction. The halting piece 24 has a rectangular configuration. The function of the halting piece 24 will be described later.

The stopper bushing 3a has opposite ends 37 and 38. The stopper bushing 3a is sandwiched between the hose hanger 1a and the hanger stopper 2a, and formed with a third axial bore 32 therethrough. The stopper bushing 3a is made of a radially expandable material, that has a third outer diameter or width being normally approximate to the second outer diameter or width of the hanger stopper 2a. In the embodiment shown in Figures 1-3, the radially expandable material for making the stopper bushing 3a is a resilient material, such as rubber.

To assemble the hose hanger 1a, the hanger stopper 2a and the stopper bushing 3 a together, the hanger fixing bolt 4 is inserted through the first axial bore 14 of the hose hanger 1a, the third axial bore 32 of the stopper bushing 3a and the second axial bore 22 of the hanger stopper 2a. Prior to mounting of the cable harness assembly 100a to a bicycle frame, a tip end of the hanger fixing bolt 4 is inserted and threaded into the second axial bore 22 of the hanger stopper 2a by a short distance sufficient to hold the hose hanger 1a, the stopper bushing 3a and the hanger stopper 2a together, but without providing external forces on the stopper bushing 3a, as shown in Figure 2.

In use, the cable harness assembly 100a is inserted into a cable stopper 42 that is formed with an inner wall 44 and is conventionally brazed to a bicycle frame 40. The lateral end 15 of the hose hanger 1a next to the stopper bushing 3a then urges against a lateral end of the cable stopper 42. The halting piece 24 extending from the hanger stopper 2a is inserted through a slit (not shown) of the cable stopper 42 to halt the hanger stopper 2a from further rotation driven by the hanger fixing bolt 4. A tool (not shown) is then implemented to drive the hanger fixing bolt 4 such that the fixing bolt 4 is fastened to the second axial bore 22 of the hanger stopper 2a. The second axial bore 22 of the hanger stopper 2a may be formed with threads (not shown) therein so as to facilitate the fastening operation. The fixing bolt 4 may also be fastened to the second axial bore 22 in a self-tapping manner so as to reduce manufacturing cost of the hanger stopper 2a.

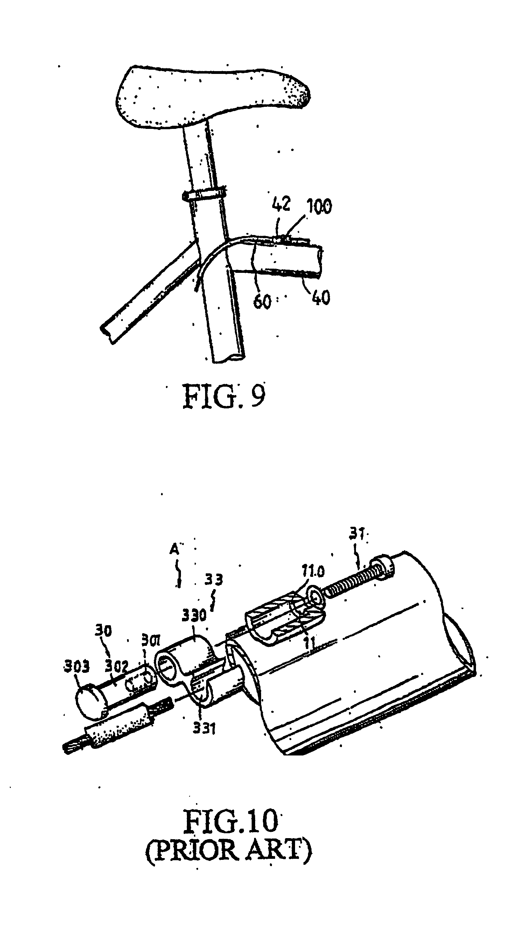

In the embodiments as shown in Figures 1-3, the third diameter or width of the stopper bushing 3a will expand in one way or another as a result of the fastening operation of the hanger fixing bolt 4, so as to attain the desired mounting effect to the bicycle frame 40. Afterwards, a hose or hydraulic line 60 can be inserted into the cable portion 16 of the hose hanger 1a by being pressed through the longitudinal opening 162 so as to be secured to the bicycle frame 40, as shown in Figure 9.

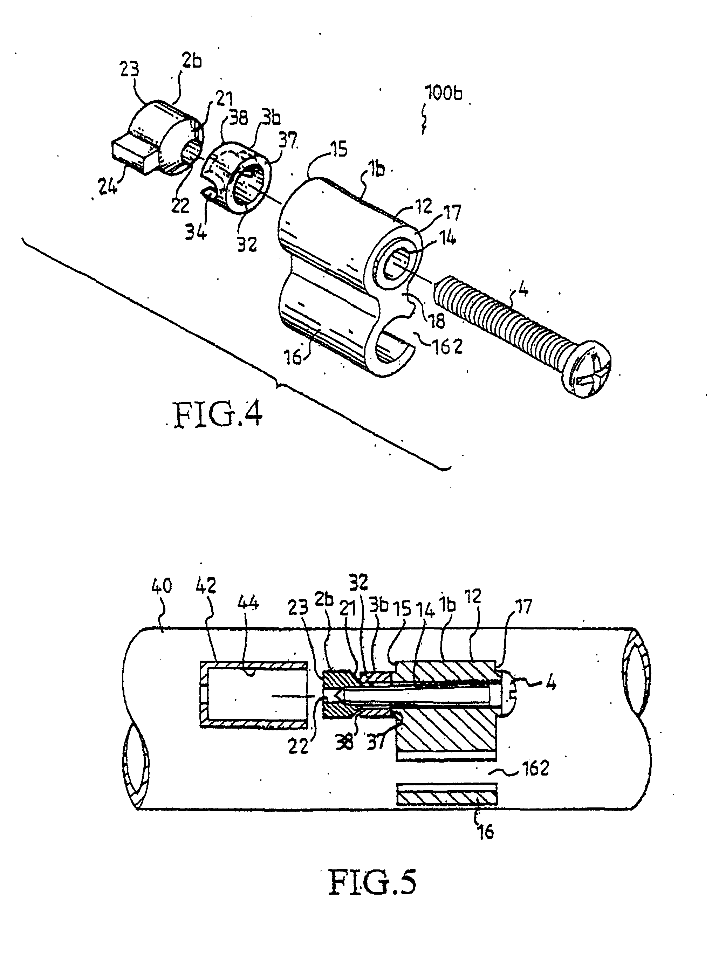

In a further embodiment shown in Figures 4 and 5, the lateral ends 21 of the hanger stopper 2b next to the stopper bushing 3b tapers radially inwards. The radially expandable material for making the stopper bushing 3b is a deformable, rigid material, such as metal or plastic. The stopper bushing 3b is further formed with at least one blind slit 34 along a longitudinal direction thereof. The cooperation between the tapering lateral end 21 and the slits 34 will be described later.

Accordingly, in the embodiment as shown in Figures 1-3, the fastening operation will force the hanger stopper 2a to move towards the stopper bushing 3a so as to press against the stopper bushing 3a, such that the third outer diameter or width of the stopper bushing 3a increases due to radial deformation to a point to urge against the inner wall 44 of the cable stopper 42 so as to secure the cable harness 100a to the bicycle frame 40 due to radial expansion of the stopper bushing 3a.

The second embodiment is assembled in substantially the same manner as the first embodiment. The hose hanger 1b, the hanger stopper 2b and the stopper bushing 3b are coupled together by inserting the hanger fixing bolt 4 through the first axial bore 14 of the hose hanger 1b, the third axial bore 32 of the stopper bushing 3b and the second axial bore 22 of the hanger stopper 2b. Prior to mounting of the cable harness assembly 100b to a bicycle frame, a tip end of the hanger fixing bolt 4 is inserted and threaded into the second axial bore 22 of the hanger stopper 2b by a distance sufficient to hold the hose hanger 1b, the stopper bushing 3b and the hanger stopper 2b together, but without providing external forces on the stopper bushing 3b, as shown in Figure 5.

In use, the cable harness assembly 100b is inserted into a cable stopper 42 that is formed with an inner wall 44 and is conventionally brazed to a bicycle frame 40. The lateral end 15 of the hose hanger 1b next to the stopper bushing 3b then urges against a lateral end of the cable stopper 42. The halting piece 24 extending from the hanger stopper 2b is inserted through a slit (not shown) of the cable stopper 42 to halt the hanger stopper 2b from further rotation driven by the hanger fixing bolt 4. A tool (not shown) is then implemented to drive the hanger fixing bolt 4 such that the fixing bolt 4 is fastened to the second axial bore 22 of the hanger stopper 2b. The second axial bore 22 of the hanger stopper 2b may be formed with threads (not shown) therein so as to facilitate the fastening operation. The fixing bolt 4 may also be fastened to the second axial bore 22 in a self-tapping manner so as to reduce manufacturing cost of the hanger stopper 2b.

In the embodiment as shown in Figures 4 and 5, the fastening operation will force the hanger stopper 2b to move towards the stopper bushing 3b subjecting the tapering lateral end 21 of the hanger stopper 2b to tuck into the third axial bore 32 of the stopper bushing 3b and causing the stopper bushing 3b to expand and flare open due to the slits 34 provided on the stopper bushing 3b, so as to secure the cable harness assembly 100b to the bicycle frame 40 due to radial expansion of the stopper bushing 3b at the flared portion.

In the embodiments as shown in Figures 4 and 5, the third diameter or width of the stopper bushing 3b will expand in one way or another as a result of the fastening operation of the hanger fixing bolt 4, so as to attain the desired mounting effect to the bicycle frame 40. Afterwards, a hose or hydraulic line 60 can be inserted into the cable portion 16 of the hose hanger 1b by being pressed through the longitudinal opening 162 to be secured to the bicycle frame 40, as shown in Figure 9.

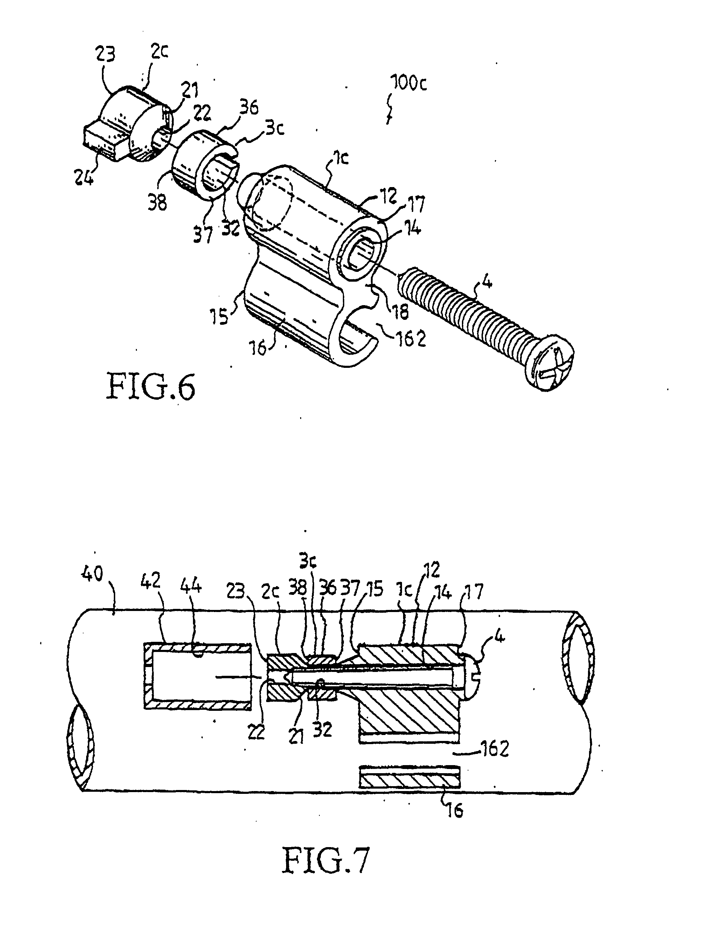

In still a further embodiment shown in Figures 6 and 7, a portion of the lateral end 15 of the hose hanger 1c next to the stopper bushing 3c also tapers radially inwards, preferably from a radial location that is approximate to the second outer diameter or width of the hanger stopper 2c. In this particular embodiment, the stopper bushing 3c is a C-shaped member 36, preferably made of metal or plastic, with a third axial bore 32 as shown. The cooperation between the tapering lateral ends 21, the portion of the lateral end 15 and the C-shaped member 36 will be described later.

The third embodiment is assembled in substantially the same manner as the first embodiment. To assemble the hose hanger 1c, the hanger stopper and the stopper bushing 3c together, the hanger fixing bolt 4 is inserted through the first axial bore 14 of the hose hanger 1c, the third axial bore 32 of the stopper bushing 3c, and the second axial bore 22 of the hanger stopper 2c. Prior to mounting of the cable harness assembly 100c to a bicycle frame, a tip end of the hanger fixing bolt 4 is inserted and threaded into the second axial bore 22 of the hanger stopper 2c by a short distance sufficient enough to hold the hose hanger 1c, the stopper bushing 3c, and the hanger stopper 2c together, but without providing external forces on the stopper bushing 3c, such as those shown in Figure 7.

In use, the cable harness assembly 100c is inserted into a cable stopper 42 that is formed with an inner wall 44 and is conventionally brazed to a bicycle frame 40. The lateral end 15 of the hose hanger 1c next to the stopper bushing 3c then urges against a lateral end of the cable stopper 42. The halting piece 24 extending from the hanger stopper 2c is inserted through a slit (not shown) of the cable stopper 42 to halt the hanger stopper 2c from further rotation driven by the hanger fixing bolt 4. A tool (not shown) is then implemented to drive the hanger fixing bolt 4 such that the fixing bolt 4 is fastened to the second axial bore 22 of the hanger stopper 2c. The second axial bore 22 of the hanger stopper 2c may be formed with threads (not shown) therein so as to facilitate the fastening operation. The fixing bolt 4 may also be fastened to the second axial bore 22 in a self-tapping manner so as to reduce manufacturing cost of the hanger stopper 2c.

In the embodiment as shown in Figures 6 and 7, the fastening operation will force the hanger stopper 2c to move towards the C-shaped member 36, subjecting the tapering lateral end 21 of the hanger stopper 2c to tuck into the axial bore 32 of the C-shaped member 36 and further causing the expanded C-shaped member 36 to slide towards the tapering lateral end 15 of the hose hanger 1c, to secure the cable harness assembly 100c to the bicycle frame 40 due to expansion of the C-shaped member 36.

In the embodiments as shown in Figures 6 and 7, the third diameter or width of the stopper bushing 3c will expand in one way or another as a result of the fastening operation of the hanger fixing bolt 4, so as to attain the desired mounting effect to the bicycle frame 40. Afterwards, a hose or hydraulic line 60 can be inserted into the cable portion 16 of the hose hanger 1c by being pressed through the longitudinal opening 162 to be secured to the bicycle frame 40, as shown in Figure 9.

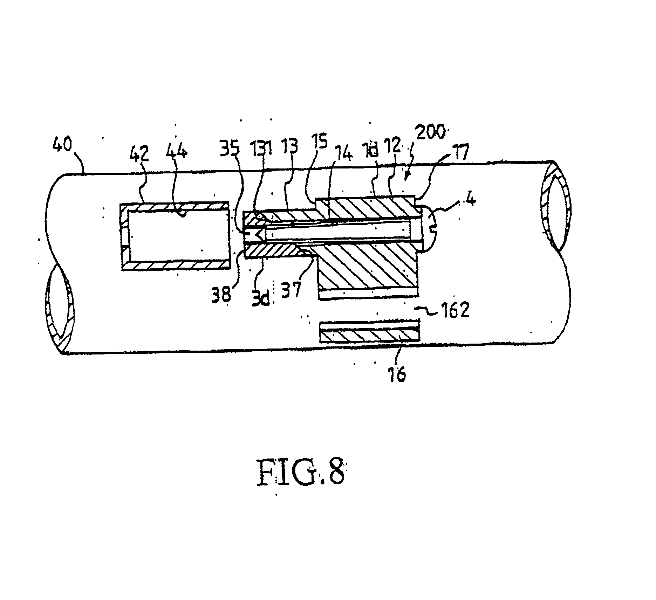

Another embodiment of this invention as shown in Figure 8, it is disclosed a cable harness assembly 200 comprising a hose hanger 1d, a stopper bushing 3d and a hanger fixing bolt 4. The hose hanger 1d, in this embodiment, includes a body portion 12 of a first outer diameter or width, a cable portion 16 extending from the body portion 12, and opposite ends 15 and 17. The body portion 12 has a first outer diameter or width and is formed with a first axial bore 14 of a first inner diameter or width therethrough. The body portion 12 of this embodiment is provided at one of the lateral ends 15 with a head 13 having a fourth outer diameter or width, preferably being smaller than the first outer diameter or width of the body portion 12, having a lateral end 131. The hose hanger 1d, in this embodiment, may be optionally, a two-piece structure, where the head 13 is independent from the body portion 12, or a one-piece structure, where the head 13 is integrally formed with the hose hanger 1d.

The stopper bushing 3d is placed next to the hose hanger 1d and formed with a threaded axial bore 35 of a second inner diameter or width therethrough. The stopper bushing 3d is made of a rigid material, such as metal or plastic, that has a third outer diameter or width being approximate to the fourth outer diameter or width of the head 13 of the hose hanger 1d.

In this embodiment, the lateral end 131 of the head 13 of the hose hanger 1d and the lateral end 37 of the stopper bushing 3d next to each other are both skewed, such that the fastening operation as described previously, will force the stopper bushing 3d to rotate and skew with respect to the head 13 of the hose hanger 1d due the skewed interface therebetween, to a point that interfacing tip of the head 13 urges against the inner wall 44 of the cable stopper 42 so as to secure the cable harness 200 to the bicycle frame 40. The first inner diameter or width of the first axial bore 14 of the hose hanger 1d may be, optionally, slightly bigger than the second inner diameter or width of the threaded axial bore 35 of the stopper bushing 3d, to facilitate the skewing of the stopper bushing 3d when the fixing bolt 4 is fastened to the threaded axial bore 35 of the stopper bushing 3d.

In this embodiment, the disposition between the stopper bushing 3d and the hose hanger 1d changes as a result of the fastening operation of the hanger fixing bolt 4, to attain the desired mounting effect to the bicycle frame 40.

Apparently, the various embodiments of cable harness assembly 100a, 100b, 100c and 200 as described can be easily mounted to a conventional cable stopper 42 without the necessity to dismantle the cable harness assembly 100a, 100b, 100c and 200 or involve extraneous work.

While only selected embodiments have been chosen to illustrate the invention, it will be apparent to those skilled in the art from this disclosure that various changes and modifications can be made without departing from the scope of the invention as defined in the appended claims. Also, the foregoing description of the embodiments according to the invention are provided for illustration only, and not for the purpose of limiting the invention as defined by the appended claims and their equivalents.

## Claims

1. A cable harness assembly (100a, 100b, 100c) for insertion into a cable stopper (42) formed with an inner wall and attached to the bicycle frame, comprising:
a hose hanger (1a, 1b, 1c) including a body portion (12) and a cable portion (16) extending from the body portion (12), said body portion (12) having a first axial bore (14) extending between opposite ends (15, 17) and a first outer width;
a hanger stopper (2a, 2b, 2c) having a second axial bore (22) extending between opposite ends (21, 23) and a second outer width with a halting piece (24) extending from said hanger stopper (2a, 2b, 2c) and therethrough;
a stopper bushing (3a, 3b, 3c) having a third axial bore (32) extending between opposite ends (37, 38) and a third outer width being normally approximate to said second outer width, said stopper bushing (3a, 3b, 3c) being made of a radially expandable material and located between said hose hanger (1a, 1b, 1c) and said hanger stopper (2a, 2b, 2c); and
a hanger fixing bolt (4) extending through said first axial bore (14) of said hose hanger (1a, 1b, 1c), said third axial bore (32) of said stopper bushing (3a, 3b, 3c) and
said second axial bore (22) of said hanger stopper (2a, 2b, 2c) to couple said hose hanger (1a, 1b, 1c), said stopper bushing (3a, 3b, 3c) and said hanger stopper (2a, 2b, 2c) together before mounting the cable harness on a bicycle frame,
said third outer width of said stopper bushing (3a, 3b, 3c) increasing when said fixing bolt (4) is fastened to said second axial bore (22) of said hanger stopper (2a, 2b, 2c) forcing said hose hanger (1a, 1b, 1c) and said hanger stopper (2a, 2b, 2c) to press against said stopper bushing (3a, 3b, 3c), said cable assembly being secured in place by the radial expansion of the stopper bushing when said fixing bolt is fastened.

2. The cable harness assembly (100a, 100b, 100c) according to claim 1, wherein said second outer width of the hanger portion is smaller than said first outer width of said body portion (12) of said hose hanger (1a, 1b, 1c).

3. The cable harness assembly (100a, 100b, 100c) according to claim 1 or 2, wherein said hose hanger (1a, 1b, 1c) further includes a neck portion joining said body portion (12) and said cable portion (16) for enhancing flexibility of said hose hanger (1a, 1b, 1c).

4. The cable harness assembly (100a, 100b, 100c) according to any of the preceding claims, wherein
said cable portion (16) is formed with a longitudinal opening (162).

5. The cable harness assembly (100a, 100b, 100c) according to any of the preceding claims, wherein
said cable portion (16) has a C-shaped cross-section.

6. The cable harness assembly (100a, 100b, 100c) according to any of the preceding claims, wherein
said hose hanger (1a, 1b, 1c) is integrally formed as a one-piece, unitary member by injection molding.

7. The cable harness assembly (100a, 100b, 100c) according to any of the preceding claims, wherein
said radially expandable material of said stopper bushing (3a, 3b, 3c) is a resilient material.

8. The cable harness assembly (100a, 100b, 100c) according to claim 7, wherein
said resilient material of said stopper bushing (3a, 3b, 3c) is rubber.

9. The cable harness assembly (100b, 100c) according to any of the preceding claims, wherein
one of said opposite ends of said hanger stopper (2b, 2c) tapers radially inwards.

10. The cable harness assembly (100c) according to any of the preceding claims, wherein
said stopper bushing (3c) is made of a deformable, rigid material and formed with at least one blind slit along a longitudinal direction thereof.

11. The cable harness assembly (100a, 100b, 100c) according to claim 10, wherein
said deformable, rigid material is metal.

12. The cable harness assembly (100a, 100b, 100c) according to claim 10, wherein
said deformable, rigid material is plastic.

13. The cable harness assembly (100c) according to claim 9 to 12, wherein
one of the opposite ends of said hose hanger (1c) tapers radially inwards, and said stopper bushing (3c) is a C-shaped member.

14. The cable harness assembly (100c) according to claim 13, wherein
said C-shaped member is made of metal.

15. The cable harness assembly (100c) according to claim 13, wherein
said C-shaped member is made of plastic.

16. The cable harness assembly (100a, 100b, 100c) according to any of the preceding claims, wherein
said fixing bolt (4) is fastened to said second axial bore (22) of said hanger stopper (2a, 2b, 2c) in a self-tapping manner.

17. The cable harness assembly (100a, 100b, 100c) according to any of claims 1 to 15, wherein
said second axial bore (22) is formed with threads therein.

18. The cable harness assembly (100a, 100b, 100c) according to any of the preceding claims, wherein
said halting piece extends from said hanger stopper in an outwardly radial direction and is of a rectangular configuration.

19. A cable harness assembly (200) for insertion into a cable stopper (42) formed with an inner wall and attached to the bicycle frame comprising:
a hose hanger (1d) including a body portion (12) and a cable portion (16) extending from the body portion (12), said body portion (12) having a first axial bore (14) with a first inner width extending between opposite ends (15, 17) and a first outer width, said body portion (12) being provided at one of said opposite ends (15) with a head (13) of a second outer width having a skewed end;
a stopper bushing (3d) having a threaded axial bore (35) with a second inner width extending between opposite ends (37, 38) and a third outer width being approximate to said second outer width of said head (13), said stopper bushing (3d) being located adjacent said hose hanger (1d) with one of said opposite ends being skewed and located adjacent said skewed end of said head (13) of said hose hanger (1d); and
a hanger fixing bolt (4) extending through said first axial bore (14) of said hose hanger (1d) and said threaded axial bore (35) of said stopper bushing (3d) to couple said hose hanger (1d) and said stopper bushing (3d) together before mounting the cable harness on a bicycle frame,
said stopper bushing (3d) being rotated and skewed with respect to said head (13) of said hose hanger (1d) when said fixing bolt (4) is threaded into said threaded bore (35) of said stopper bushing (3d), whereby the interfacing tip of said head (13) urges against the inner wall of the cable stopper so as to secure the cable harness to the bicycle frame.

20. The cable harness assembly (200) according to claim 19, wherein said first inner width of said first axial bore (14) of said hose hanger (1d) is slightly bigger than said second inner width of said threaded axial bore (35) of said stopper bushing (3d).

21. The cable harness assembly (200) according to claim 19 or 20, wherein
said second outer width of said head (13) is smaller than said first outer width of said body portion (12) of said hose hanger (1d).

22. The cable harness assembly (200) according to any of claims 19 to 21, wherein
said hose hanger (1d) further includes a neck portion joining said body portion (12) and said cable portion (16) for enhancing flexibility of said hose hanger (1d).

23. The cable harness assembly (200) according to any of claims 19 to 22, wherein
said cable portion (16) is formed with a longitudinal opening (162).

24. The cable harness assembly (200) according to any of claims 19 to 23, wherein
said cable portion (16) has a C-shaped cross-section.

25. The cable harness assembly (200) according to any of claims 19 to 24, wherein
said hose hanger (1d) is integrally formed as a one-piece, unitary member by injection molding.

26. The cable harness assembly (200) according to any of claims 19 to 25, wherein
said stopper bushing (3d) is made of a rigid material.

27. The cable harness assembly (200) according to claim 26, wherein
said rigid material is plastic.

28. The cable harness assembly (200) according to claim 26, wherein
said rigid material is metal.

29. The cable harness assembly (200) according to any of claims 19 to 28, wherein said hose hanger (1d) is a two-piece structure, with said head (13) being independent from said body (12).

30. The cable harness assembly according to any of claims 19 to 28, wherein
said hose hanger (1d) is a one-piece structure with said head (13) being integrally formed with said hose hanger (1d).

## Patentansprüche

1. Kabelkonfektioniereinrichtung (100a, 100b, 100c) zum Einschieben in einen Kabelstopper (42), der mit einer inneren Wand ausgebildet und am Fahrradrahmen angebracht ist, umfassend:
ein Schlauchaufhänger (1a, 1b, 1c), der einen Körperabschnitt (12) und einen Kabelabschnitt (16) enthält, der sich vom Körperabschnitt (12) aus erstreckt, wobei der Körperabschnitt (12) eine erste axiale Bohrung (14), die sich zwischen gegenüberliegenden Enden (15, 17) erstreckt, und eine erste äußere Breite aufweist;
einen Aufhängerstopper (2a, 2b, 2c), der eine zweite axiale Bohrung (22), die sich zwischen gegenüberliegenden Enden (21, 23) erstreckt, und eine zweite äußere Breite aufweist, wobei sich ein Sperrteil (24) vom Aufhängestopper (2a, 2b, 2c) aus und durch diesen hindurch erstreckt;
eine Stopperhülse (3a, 3b, 3c), die eine dritte axiale Bohrung (32) aufweist, die sich zwischen gegenüberliegenden Enden (37, 38) erstreckt und eine dritte äußere Breite aufweist, die normalerweise etwa die zweite äußere Breite ist, wobei die Stopperhülse (3a, 3b, 3c) aus in radialer Richtung ausdehnbarem Material besteht und sich zwischen dem Schlauchaufhänger (1a, 1b, 1c) und dem Aufhängerstopper (2a, 2b, 2c) befindet; und
einen Aufhängerfixierbolzen (4), der sich durch die erste axiale Bohrung (14) des Schlauchaufhängers (1a, 1b, 1c), die dritte axiale Bohrung der Stopperhülse (3a, 3b, 3c) und die zweite axiale Bohrung (22) des Aufhängerstoppers (2a, 2b, 2c) erstreckt, um den Schlauchaufhänger (1a, 1b, 1c), die Stopperhülse (3a, 3b, 3c) und den Aufhängerstopper (2a, 2b, 2c) miteinander zu koppeln, bevor die Kabelkonfektioniereinrichtung an einem Fahrradrahmen befestigt wird,
wobei die dritte äußere Breite der Stopperhülse (3a, 3b, 3c) sich vergrößert, wenn der Fixierbolzen (4) in der zweiten axialen Bohrung (22) des Aufhängerstoppers (2a, 2b, 2c) befestigt wird, wobei der Schlauchaufhänger (1a, 1b, 1c) und der Aufhängerstopper (2a, 2b, 2c) zum Andrücken gegen die Stopperhülse (3a, 3b, 3c) gezwungen werden, wobei die Kabelanordnung an ihrem Platz durch die radiale Ausdehnung der Stopperhülse befestigt wird, wenn der Fixierbolzen befestigt wird.

2. Kabelkonfektioniereinrichtung (100a, 100b, 100c) nach Anspruch 1, bei der die zweite äußere Breite des Aufhängerabschnitts kleiner als die erste äußere Breite des Körperabschnitts (12) des Schlauchaufhängers (1a, 1b, 1c) ist.

3. Kabelkonfektioniereinrichtung (100a, 100b, 100c) nach Anspruch 1 oder 2, bei der der Schlauchaufhänger (1a, 1b, 1c) weiter einen Halsabschnitt enthält, der den Körperabschnitt (12) und den Kabelabschnitt (16) zusammenführt, um die Flexibilität des Schlauchaufhängers (1a, 1b, 1c) zu verstärken.

4. Kabelkonfektioniereinrichtung (100a, 100b, 100c) nach einem der vorherigen Ansprüche, bei der der Kabelabschnitt (16) mit einer Längsöffnung (162) ausgebildet ist.

5. Kabelkonfektioniereinrichtung (100a, 100b, 100c) nach einem der vorherigen Ansprüche, bei der der Kabelabschnitt (16) einen C-förmigen Querschnitt aufweist.

6. Kabelkonfektioniereinrichtung (100a, 100b, 100c) nach einem der vorherigen Ansprüche, bei der der Schlauchaufhänger (1a, 1b, 1c) als einstückiges einheitliches Element durch Spritzgießen integral ausgebildet ist.

7. Kabelkonfektioniereinrichtung (100a, 100b, 100c) nach einem der vorherigen Ansprüche, bei der das radial ausdehnbare Material der Stopperhülse (3a, 3b, 3c) ein elastisches Material ist.

8. Kabelkonfektioniereinrichtung (100a, 100b, 100c) nach Anspruch 7, bei der das elastisches Material der Stopperhülse (3a, 3b, 3c) Gummi ist.

9. Kabelkonfektioniereinrichtung (100a, 100b, 100c) nach einem der vorherigen Ansprüche, bei der eines der gegenüberliegenden Enden des Aufhängerstoppers (2a, 2b) sich radial nach innen verjüngt.

10. Kabelkonfektioniereinrichtung (100a, 100b, 100c) nach einem der vorherigen Ansprüche, bei der die Stopperhülse (3c) aus einem verformbaren, steifen Material besteht und mit wenigstens einem Blindschlitz längs ihrer Längsrichtung ausgebildet ist.

11. Kabelkonfektioniereinrichtung (100a, 100b, 100c) nach Anspruch 10, bei der das verformbare, steife Material Metall ist.

12. Kabelkonfektioniereinrichtung (100a, 100b, 100c) nach Anspruch 10, bei der das verformbare, steife Material Kunststoff ist.

13. Kabelkonfektioniereinrichtung (100a, 100b, 100c) nach einem der Ansprüche 9 bis 12, bei der eines der gegenüberliegenden Enden des Schlauchaufhängers (1c) sich radial nach innen verjüngt und die Stopperhülse (3c) ein C-förmiges Element ist.

14. Kabelkonfektioniereinrichtung (100a, 100b, 100c) nach Anspruch 13, bei der das C-förmige Element aus Metall besteht.

15. Kabelkonfektioniereinrichtung (100a, 100b, 100c) nach Anspruch 13, bei der das C-förmige Element aus Kunststoff besteht.

16. Kabelkonfektioniereinrichtung (100a, 100b, 100c) nach einem der vorherigen Ansprüche, bei der der Fixierbolzen (4) an der zweiten axialen Bohrung (22) des Aufhängerstoppers (2a, 2b, 2c) in einer selbstfestziehenden Weise befestigt ist.

17. Kabelkonfektioniereinrichtung (100a, 100b, 100c) nach einem der Ansprüche 1 bis 15, bei der die zweite axiale Bohrung (22) mit Gewinde darin ausgebildet ist.

18. Kabelkonfektioniereinrichtung (100a, 100b, 100c) nach einem der vorherigen Ansprüche, bei der das Anhaltestück sich vom Aufhängerstopper in einer Richtung radial nach außen erstreckt und eine rechteckige Konfiguration aufweist.

19. Kabelkonfektioniereinrichtung (200) zum Einschieben in einen Kabelstopper (42), der mit einer inneren Wand ausgebildet und am Fahrradrahmen angebracht ist, umfassend:
ein Schlauchaufhänger (1d), der einen Körperabschnitt (12) und einen Kabelabschnitt (16) enthält, der sich vom Körperabschnitt (12) aus erstreckt, wobei der Körperabschnitt (12) eine erste axiale Bohrung (14), die sich mit einer ersten inneren Breite zwischen gegenüberliegenden Enden (15, 17) erstreckt , und eine erste äußere Breite aufweist, wobei der Körperabschnitt (12) an einem der gegenüberliegenden Enden (15) mit einem Kopf (13) mit einer zweiten äußeren Breite versehen ist, der ein abgeschrägtes Ende aufweist;
eine Stopperhülse (3c), die eine axiale Gewindebohrung (35), die sich zwischen gegenüberliegenden Enden (37, 38) mit einer zweiten inneren Breite erstreckt, und eine dritte äußere Breite aufweist, die etwa die zweite äußere Breite des Kopfes (13) ist,
wobei die Stopperhülse (3d) sich neben dem Schlauchaufhänger (1d) befindet, wobei eines der gegenüberliegenden Enden abgeschrägt ist und sich neben dem abgeschrägten Ende des Kopfes (13) des Schlauchaufhängers (1d) befindet; und einen Aufhängerfixierbolzen (4), der sich durch die erste axiale Bohrung (14) des Schlauchaufhängers (1d) und die axiale Gewindebohrung der Stopperhülse (3d) erstreckt, um den Schlauchaufhänger (1d) und die Stopperhülse (3d) miteinander zu koppeln, bevor die Kabelkonfektioniereinrichtung an einem Fahrradrahmen befestigt wird,
wobei die Stopperhülse (3d) bezüglich des Kopfes (13) des Schlauchaufhängers (1d) gedreht und abgeschrägt wird, wenn der Fixierbolzen (4) in die Gewindebohrung (35) der Stopperhülse (3d) eingeschraubt wird, wodurch die die Schnittstelle bildende Spitze des Kopfes (13) gegen die Innenwand des Kabelstoppers drängt, um die Kabelkonfektioniereinrichtung am Fahrradrahmen zu befestigen.

20. Kabelkonfektioniereinrichtung (200) nach Anspruch 19, bei der die erste innere Breite der ersten axialen Bohrung (14) des Schlauchaufhängers (1d) etwas größer ist als die zweite innere Breite der axialen Gewindebohrung (35) der Stopperhülse (3d).

21. Kabelkonfektioniereinrichtung (200) nach Anspruch 19 oder 20, bei der die zweite äußere Breite des Kopfes (13) kleiner ist als die erste äußere Breite des Körperabschnitts (12) des Schlauchaufhängers (1d).

22. Kabelkonfektioniereinrichtung (200) nach einem der Ansprüche 19 bis 21, bei der der Schlauchaufhänger (1d) weiter einen Halsabschnitt enthält, der der den Körperabschnitt (12) und den Kabelabschnitt (16) zusammenführt, um die Flexibilität des Schlauchaufhängers (1d) zu verstärken.

23. Kabelkonfektioniereinrichtung (20) nach einem der Ansprüche 19 bis 22, bei der der Kabelabschnitt (16) mit einer Längsöffnung (162) ausgebildet ist.

24. Kabelkonfektioniereinrichtung (200) nach einem der Ansprüche 19 bis 23, bei der der Kabelabschnitt (16) einen C-förmigen Querschnitt aufweist.

25. Kabelkonfektioniereinrichtung (200) nach einem der Ansprüche 19 bis 24, bei der der Schlauchaufhänger (1d) als einstückiges einheitliches Element durch Spritzgießen integral ausgebildet ist.

26. Kabelkonfektioniereinrichtung (200) nach einem der Ansprüche 19 bis 25, bei der die Stopperhülse (3d) aus einem steifen Material besteht.

27. Kabelkonfektioniereinrichtung (200) nach Anspruch 26, bei der das steife Material Kunststoff ist.

28. Kabelkonfektioniereinrichtung (200) nach Anspruch 26, bei der das steife Material Metall ist.

29. Kabelkonfektioniereinrichtung (200) nach einem der Ansprüche 19 bis 28, bei der der Schlauchaufhänger (1d) eine zweiteilige Struktur ist, wobei der der Kopf (13) vom Körper (12) unabhängig ist.

30. Kabelkonfektioniereinrichtung (200) nach einem der Ansprüche 19 bis 28, bei der Schlauchaufhänger (1d) eine einteilige Struktur ist, wobei der der Kopf (13) integral mit dem Schlauchaufhänger (1d) ausgebildet ist.

## Revendications

1. Dispositif (100a, 100b, 100c) pour faisceau de câbles à insérer dans un arrête-câble (42) pourvu d'une paroi intérieure et fixé au cadre d'une bicyclette, comprenant :
une potence (1a, 1b, 1c) de flexible comportant une partie formant corps (12) et une partie (16) pour câbles qui s'étend depuis la partie formant corps (12), ladite partie formant corps (12) ayant un premier alésage axial (14) s'étendant entre des extrémités opposées (15, 17) et une première largeur extérieure ;
une butée (2a, 2b, 2c) de potence ayant un deuxième alésage axial (22) s'étendant entre des extrémités opposées (21, 23) et une deuxième largeur extérieure avec une pièce d'arrêt (24) qui s'étend depuis ladite butée (2a, 2b, 2c) de potence et à travers celle-ci ;
une douille d'arrêt (3a, 3b, 3c) ayant un troisième alésage axial (32) s'étendant entre des extrémités opposées (37, 38) et une troisième largeur extérieure qui est normalement très semblable à ladite deuxième largeur extérieure, ladite douille d'arrêt (3a, 3b, 3c) étant en matière radialement expansible et située en ladite potence (1a, 1b, 1c) de flexible et ladite butée (2a, 2b, 2c) de potence ; et
un boulon (4) de fixation de potence s'étendant à travers ledit premier alésage axial (14) de ladite potence (1a, 1b, 1c) de flexible, ledit troisième alésage axial (32) de ladite douille d'arrêt (3a, 3b, 3c) et ledit deuxième alésage axial (22) de ladite butée (2a, 2b, 2c) de potence afin de réunir les unes aux autres ladite potence (1a, 1b, 1c) de flexible, ladite douille d'arrêt (3a, 3b, 3c) et ladite butée (2a, 2b, 2c) de potence avant le montage du faisceau de câbles sur un cadre de bicyclette,
ladite troisième largeur extérieure de ladite douille d'arrêt (3a, 3b, 3c) augmentant lorsque ledit boulon de fixation (4) est fixé dans ledit deuxième alésage axial (22) de ladite butée (2a, 2b, 2c) de potence en amenant ladite potence (1a, 1b, 1c) de flexible et ladite butée (2a, 2b, 2c) de potence à appuyer contre ladite douille d'arrêt (3a, 3b, 3c), ledit dispositif pour câbles étant immobilisé en place par le déploiement radial de la douille d'arrêt lorsque ledit boulon de fixation est fixé.

2. Dispositif (100a, 100b, 100c) pour faisceau de câbles selon la revendication 1, dans lequel ladite deuxième largeur extérieure de la partie formant potence est inférieure à ladite première largeur extérieure de ladite partie formant corps (12) de ladite potence (1a, 1b, 1c) de flexible.

3. Dispositif (100a, 100b, 100c) pour faisceau de câbles selon la revendication 1 ou 2, dans lequel ladite potence (1a, 1b, 1c) de flexible comporte en outre un étranglement réunissant ladite partie formant corps (12) et ladite partie pour câbles (16) afin l'accroître la flexibilité de ladite potence (1a, 1b, 1c) de flexible.

4. Dispositif (100a, 100b, 100c) pour faisceau de câbles selon l'une quelconque des revendications précédentes, dans lequel
ladite partie (16) pour câbles est pourvue d'une ouverture longitudinale (162).

5. Dispositif (100a, 100b, 100c) pour faisceau de câbles selon l'une quelconque des revendications précédentes, dans lequel
ladite partie (16) pour câbles a une section transversale en C.

6. Dispositif (100a, 100b, 100c) pour faisceau de câbles selon l'une quelconque des revendications précédentes, dans lequel
ladite potence (1a, 1b, 1c) de flexible est intégralement réalisée, par moulage par injection, sous la forme d'un élément unitaire, d'une seule pièce.

7. Dispositif (100a, 100b, 100c) pour faisceau de câbles selon l'une quelconque des revendications précédentes, dans lequel
ladite matière radialement expansible de ladite douille d'arrêt (3a, 3b, 3c) est une matière élastique.

8. Dispositif (100a, 100b, 100c) pour faisceau de câbles selon la revendication 7, dans lequel ladite matière élastique de ladite douille d'arrêt (3a, 3b, 3c) est du caoutchouc.

9. Dispositif (100b, 100c) pour faisceau de câbles selon l'une quelconque des revendications précédentes, dans lequel
une desdites extrémités opposées de ladite butée (2b, 2c) de potence est conique radialement vers l'intérieur.

10. Dispositif (100c) pour faisceau de câbles selon l'une quelconque des revendications précédentes, dans lequel
ladite douille d'arrêt (3c) est en matière rigide déformable et est pourvue d'au moins une entaille borgne dans la direction longitudinale de celle-ci.

11. Dispositif (100a, 100b, 100c) pour faisceau de câbles selon la revendication 10, dans lequel
ladite matière rigide déformable est un métal.

12. Dispositif (100a, 100b, 100c) pour faisceau de câbles selon la revendication 10, dans lequel
ladite matière rigide déformable est une matière plastique.

13. Dispositif (100c) pour faisceau de câbles selon les revendications 9 à 12, dans lequel
une des extrémités opposées de ladite potence (1c) de flexible est conique radialement vers l'intérieur, et ladite douille d'arrêt (3c) est un élément en C.

14. Dispositif (100c) pour faisceau de câbles selon la revendication 13, dans lequel
ledit élément en C est en métal.

15. Dispositif (100c) pour faisceau de câbles selon la revendication 13, dans lequel
ledit élément en C est en matière plastique.

16. Dispositif (100a, 100b, 100c) pour faisceau de câbles selon l'une quelconque des revendications précédentes, dans lequel
ledit boulon de fixation (4) est fixé par autotaraudage dans ledit deuxième alésage axial (22) de ladite butée (2a, 2b, 2c) de potence.

17. Dispositif (100a, 100b, 100c) pour faisceau de câbles selon l'une quelconque des revendications 1 à 15, dans lequel
ledit deuxième alésage axial (22) est pourvu d'un filetage intérieur.

18. Dispositif (100a, 100b, 100c) pour faisceau de câbles selon l'une quelconque des revendications précédentes, dans lequel
ladite pièce d'arrêt s'étend depuis ladite butée de potence dans une direction radiale vers l'extérieur et a une configuration rectangulaire.

19. Dispositif (200) pour faisceau de câbles à insérer dans un arrête-câble (42) pourvu d'une paroi intérieure et fixé au cadre d'une bicyclette, comprenant :
une potence (1d) de flexible comportant une partie formant corps (12) et une partie (16) pour câbles qui s'étend depuis la partie formant corps (12), ladite partie formant corps (12) ayant un premier alésage axial (14) avec une première largeur intérieure s'étendant entre des extrémités opposées (15, 17) et une première largeur extérieure, ladite partie formant corps (12) étant pourvue, à l'une desdites extrémités opposées (15), d'une tête (13) à deuxième largeur extérieure ayant une extrémité oblique ;
une douille d'arrêt (3d) ayant un alésage axial fileté (35) avec une deuxième largeur intérieure s'étendant entre des extrémités opposées (37, 38) et une troisième largeur extérieure qui est très semblable à ladite deuxième largeur extérieure de ladite tête (13), ladite douille d'arrêt (3d) étant située au voisinage immédiat de ladite potence (1d) de flexible, une desdites extrémités opposées étant oblique et située au voisinage immédiat de ladite extrémité oblique de ladite tête (13) de ladite potence (1d) de flexible ; et
un boulon (4) de fixation de potence s'étendant à travers ledit premier alésage axial (14) de ladite potence (1d) de flexible et ledit alésage axial fileté (35) de ladite douille d'arrêt (3d) afin de réunir l'une à l'autre ladite potence (1d) de flexible et ladite douille d'arrêt (3d) avant le montage du faisceau de câbles sur un cadre de bicyclette,
ladite douille d'arrêt (3d) subissant une rotation et une inclinaison par rapport à ladite tête (13) de ladite potence (1d) lorsqu'on visse ledit boulon de fixation (4) dans ledit alésage fileté (35) de ladite douille d'arrêt (3d), la pointe d'interface de ladite tête (13) appuyant de ce fait contre la paroi intérieure de l'arrête-câble afin de fixer le faisceau de câbles au cadre de bicyclette.

20. Dispositif (200) pour faisceau de câbles selon la revendication 19, dans lequel
ladite première largeur intérieure dudit premier alésage axial (14) de ladite potence (1d) de flexible est un peu plus grande que ladite deuxième largeur intérieure dudit alésage axial fileté (35) de ladite douille d'arrêt (3d).

21. Dispositif (200) pour faisceau de câbles selon la revendication 19 ou 20, dans lequel
ladite deuxième largeur extérieure de ladite tête (13) est inférieure à ladite première largeur extérieure de ladite partie formant corps (12) de ladite potence (1d) de flexible.

22. Dispositif (200) pour faisceau de câbles selon l'une quelconque des revendications 19 à 21, dans lequel
ladite potence (1d) de flexible comporte en outre un étranglement réunissant ladite partie formant corps (12) et ladite partie (16) pour câbles afin d'accroître la flexibilité de ladite potence (1d) de flexible.

23. Dispositif (200) pour faisceau de câbles selon l'une quelconque des revendications 19 à 22, dans lequel
ladite partie (16) pour câble est pourvue d'une ouverture longitudinale (162).

24. Dispositif (200) pour faisceau de câbles selon l'une quelconque des revendications 19 à 23, dans lequel
ladite partie (16) pour câbles a une section transversale en C.

25. Dispositif (200) pour faisceau de câbles selon l'une quelconque des revendications 19 à 24, dans lequel
ladite potence (1d) de flexible est intégralement réalisée, par moulage par injection, sous la forme d'un élément unitaire, d'une seule pièce.

26. Dispositif (200) pour faisceau de câbles selon l'une quelconque des revendications 19 à 25, dans lequel
ladite douille d'arrêt (3d) est en matière rigide.

27. Dispositif (200) pour faisceau de câbles selon la revendication 26, dans lequel
ladite matière rigide est une matière plastique.

28. Dispositif (200) pour faisceau de câbles selon la revendication 26, dans lequel
ladite matière rigide est un métal.

29. Dispositif (200) pour faisceau de câbles selon l'une quelconque des revendications 19 à 28, dans lequel
ladite potence (1d) de flexible est une structure en deux parties, ladite tête (13) étant indépendante dudit corps (12).

30. Dispositif pour faisceau de câbles selon l'une quelconque des revendications 19 à 28, dans lequel
ladite potence (1d) de flexible est une structure d'une seule pièce, la tête (13) faisant corps avec ladite potence (1d) de flexible.
